# EUROPEAN PATENT APPLICATION

(11) **EP 2 637 091 A1**
(43) Date of publication of application: **11.09.2013**
(21) Application number: 12193472.3
(22) Date of filing: 20.11.2012
(51) Int. Cl.: G06F 3/06, H04L 29/08

(54) **Management interface for multiple storage subsystems virtualization**

(30) Priority: 07.03.2012 US 201213413731
(71) Applicant: Hitachi Ltd., Tokyo 100-8280 (JP)
(72) Inventor: Kawaguchi, Tomohiro, Tokyo, 100-8220 (JP)
(74) Representative: MERH-IP Matias Erny Reichl Hoffmann

(57) **Abstract**

A storage system comprises: storage subsystems (100a; 100b) having storage controllers managing virtual volumes (211), each storage controller managing a plurality of logical volumes and controlling to store data for a virtual volume (211) of the virtual volumes (211) to a logical volume of the logical volumes; and a control module operable, in response to receiving a command commanding a registration of a storage function for a virtual volume (211), to translate the received command into a translated command commanding a registration of the storage function for a target logical volume of the logical volumes, based on a mapping between the virtual volumes (211), the logical volumes, and the storage controllers. The storage controller which manages the target logical volume processes the translated command commanding the registration of the storage function for the target logical volume. The control module is provided in at least one of the storage controllers or another computer in the storage system.

## Description

### BACKGROUND OF THE INVENTION

The present invention relates generally to storage systems and, more particularly, to management interface for multiple storage subsystems virtualization.

"Virtual Storage Subsystem" is one of the storage virtualization technologies. The storage virtualization provides an allocation-carefree storage management method in multiple storage subsystems environment. The virtualization makes server or server user not care about the boundary of each storage subsystem. The management method treats each volume as belonging to the same single virtual storage subsystem.

One storage virtualization technology is disclosed in U.S. Patent No. 7,991,860. Traditionally, if a user has multiple storage subsystems, each storage subsystem or volume has an independent ID which cannot be succeeded between storage subsystems. Each storage subsystem provides an independent user interface to manage and control it. The setting of storage functions presents a similar problem in the virtual storage subsystem environment. When a user sets a storage function to a virtual volume, it is necessary to identify the owner storage subsystem and the related logical volume of the virtual volume to send a request, which is difficult. The virtualization provides a single-storage-subsystem-like interface such that the user does not care about the boundary of each storage subsystem. In such an environment, it should be the case where the user does not care about the boundary when the user sets a storage function for a volume. It is easy to set storage functions for a volume when the volume is created because the storage system has a right to select a storage subsystem in which to store the volume at that time. If the volume is already created and the setting of the storage function occurs after the volume creation has been completed, however, it is difficult because the storage system needs to identify the physical storage subsystem to which the volume belongs and send a request to set the storage function.

### BRIEF SUMMARY OF THE INVENTION

Exemplary embodiments of the invention provide management interface for multiple storage subsystems virtualization. Traditionally, if a user has multiple storage subsystems, the user have to identify a logical volume and its owner storage subsystem to set a storage function for a virtual volume. The present invention allows the user to be freed from the identifying process whereby a storage system has a user interface to set the function directly to the virtual volume. In this way, the user does not need to care about the boundary of each storage subsystem. As a result, the storage subsystem does not need to manage and control a volume belonging to another storage subsystem.

This invention makes it possible to set functions to an already-created volume in the multiple-storage virtualization environment. The storage system manages the relation between the virtual and logical/physical configurations (e.g., between a virtual volume and a physical storage subsystem and a logical volume in the physical storage subsystem). When a request to set a storage function is received, the storage system identifies a logical/physical ID of a designated virtual volume. The storage system sends to a physical device the request to set the storage function. If a storage subsystem receives a function setting request for a volume in another storage subsystem, it transfers the request to that other storage subsystem.

In accordance with an aspect of the present invention, a storage system comprises: a plurality of storage subsystems having a plurality of storage controllers managing a plurality of virtual volumes, each of the plurality of storage controllers managing a plurality of logical volumes and controlling to store data for a virtual volume of the plurality of virtual volumes to a logical volume of the plurality of logical volumes; and a control module operable, in response to receiving a command commanding a registration of a storage function for a virtual volume of the plurality of virtual volumes, to translate the received command into a translated command commanding a registration of the storage function for a target logical volume of the plurality of logical volumes, based on a mapping between the plurality of virtual volumes, the plurality of logical volumes, and the plurality of storage controllers. The storage controller which manages the target logical volume processes the translated command commanding the registration of the storage function for the target logical volume. The control module is provided in at least one of the storage controllers or another computer in the storage system.

In some embodiments, the control module is configured to transfer the translated command to the storage controller which manages the target logical volume. The control module is provided in a storage controller in each of the storage subsystems. Each of the storage subsystems stores the mapping between the plurality of virtual volumes, the plurality of logical volumes, and the plurality of storage controllers. The control module is configured to update a status of the target logical volume on which to perform the storage function. The storage system further comprises a host computer which includes the control module, wherein the host computer updates the mapping between the plurality of virtual volumes, the plurality of logical volumes, and the plurality of storage controllers, by collecting information from the plurality of storage subsystems, in response to the received command. Alternatively, the storage system further comprises a management terminal which includes the control module, the management terminal storing the mapping between the plurality of virtual volumes, the plurality of logical volumes, and the plurality of storage controllers. Alternatively, the control module is provided in each of the storage subsystems; the command is broadcast to each of the storage controllers; each of the storage subsystems stores the mapping between the plurality of virtual volumes, the plurality of logical volumes, and the plurality of storage controllers; and the storage controller which manages the target logical volume registers the storage function to be performed on the target logical volume, based on the translated command.

Another aspect of the invention is directed to a method managing storage functions in a storage system which includes a plurality of storage subsystems having a plurality of storage controllers managing a plurality of virtual volumes, each of the plurality of storage controllers managing a plurality of logical volumes and controlling to store data for a virtual volume of the plurality of virtual volumes to a logical volume of the plurality of logical volumes. The method comprises: in response to receiving, by a control module in the storage system, a command commanding a registration of a storage function for a virtual volume of the plurality of virtual volumes, translating the received command into a translated command commanding a registration of the storage function for a target logical volume of the plurality of logical volumes, based on a mapping between the plurality of virtual volumes, the plurality of logical volumes, and the plurality of storage controllers, the translated command commanding the registration of the storage function for the target logical volume to be processed by the storage controller which manages the target logical volume. The control module is provided in at least one of the storage controllers or another computer in the storage system.

Another aspect of this invention is directed to a computer-readable storage medium storing a plurality of instructions for controlling a data processor to manage storage functions in a storage system which includes a plurality of storage subsystems having a plurality of storage controllers managing a plurality of virtual volumes, each of the plurality of storage controllers managing a plurality of logical volumes and controlling to store data for a virtual volume of the plurality of virtual volumes to a logical volume of the plurality of logical volumes. The plurality of instructions comprise: instructions that cause the data processor, in response to receiving a command commanding a registration of a storage function for a virtual volume of the plurality of virtual volumes, to translate the received command into a translated command commanding a registration of the storage function for a target logical volume of the plurality of logical volumes, based on a mapping between the plurality of virtual volumes, the plurality of logical volumes, and the plurality of storage controllers, the translated command commanding the registration of the storage function for the target logical volume to be processed by the storage controller which manages the target logical volume.

These and other features and advantages of the present invention will become apparent to those of ordinary skill in the art in view of the following detailed description of the specific embodiments.

### BRIEF DESCRIPTION OF THE DRAWINGS

FIG. 1 illustrates an example of the physical and logical hardware configuration of a system in which the method and apparatus of the invention may be applied according to the first embodiment of the invention.

FIG. 2 illustrates an example of the virtual, physical logical hardware configuration of the system of FIG. 1.

FIG. 3 illustrates an example of a process flow of the Storage Command Control according to the first embodiment.

FIG. 4 illustrates the example of a configuration of the Logical Volume Control.

FIG. 5 illustrates an example of a configuration of the Multiple Storages Virtualization Control.

FIG. 6 illustrates an example of a configuration of the Logical Volume Management.

FIG. 7 illustrates an example of a configuration of the Virtual Volume Management Table.

FIG. 8 illustrates an example of a process flow of the I/O Control.

FIG. 9 illustrates the example of the physical and logical hardware configuration of a system according to the second embodiment.

FIG. 10 illustrates an example of the virtual, physical logical hardware configuration of the system of FIG. 9.

FIG. 11 illustrates an example of a process flow of the Storage Command Control according to the second embodiment.

FIG. 12 illustrates an example of the physical and logical hardware configuration of a system according to the third embodiment.

FIG. 13 illustrates an example of the virtual, physical logical hardware configuration of the system of FIG. 12.

FIG. 14 illustrates an example of a configuration of the Virtual Volume Reference Table.

FIG. 15 illustrates an example of a process flow of the Operation User Interface.

### DETAILED DESCRIPTION OF THE INVENTION

In the following detailed description of the invention, reference is made to the accompanying drawings which form a part of the disclosure, and in which are shown by way of illustration, and not of limitation, exemplary embodiments by which the invention may be practiced. In the drawings, like numerals describe substantially similar components throughout the several views. Further, it should be noted that while the detailed description provides various exemplary embodiments, as described below and as illustrated in the drawings, the present invention is not limited to the embodiments described and illustrated herein, but can extend to other embodiments, as would be known or as would become known to those skilled in the art. Reference in the specification to "one embodiment," "this embodiment," or "these embodiments" means that a particular feature, structure, or characteristic described in connection with the embodiment is included in at least one embodiment of the invention, and the appearances of these phrases in various places in the specification are not necessarily all referring to the same embodiment. Additionally, in the following detailed description, numerous specific details are set forth in order to provide a thorough understanding of the present invention. However, it will be apparent to one of ordinary skill in the art that these specific details may not all be needed to practice the present invention. In other circumstances, well-known structures, materials, circuits, processes and interfaces have not been described in detail, and/or may be illustrated in block diagram form, so as to not unnecessarily obscure the present invention.

Furthermore, some portions of the detailed description that follow are presented in terms of algorithms and symbolic representations of operations within a computer. These algorithmic descriptions and symbolic representations are the means used by those skilled in the data processing arts to most effectively convey the essence of their innovations to others skilled in the art. An algorithm is a series of defined steps leading to a desired end state or result. In the present invention, the steps carried out require physical manipulations of tangible quantities for achieving a tangible result. Usually, though not necessarily, these quantities take the form of electrical or magnetic signals or instructions capable of being stored, transferred, combined, compared, and otherwise manipulated. It has proven convenient at times, principally for reasons of common usage, to refer to these signals as bits, values, elements, symbols, characters, terms, numbers, instructions, or the like. It should be borne in mind, however, that all of these and similar terms are to be associated with the appropriate physical quantities and are merely convenient labels applied to these quantities. Unless specifically stated otherwise, as apparent from the following discussion, it is appreciated that throughout the description, discussions utilizing terms such as "processing," "computing," "calculating," "determining," "displaying," or the like, can include the actions and processes of a computer system or other information processing device that manipulates and transforms data represented as physical (electronic) quantities within the computer system's registers and memories into other data similarly represented as physical quantities within the computer system's memories or registers or other information storage, transmission or display devices.

The present invention also relates to an apparatus for performing the operations herein. This apparatus may be specially constructed for the required purposes, or it may include one or more general-purpose computers selectively activated or reconfigured by one or more computer programs. Such computer programs may be stored in a computer-readable storage medium, such as, but not limited to optical disks, magnetic disks, read-only memories, random access memories, solid state devices and drives, or any other types of media suitable for storing electronic information. The algorithms and displays presented herein are not inherently related to any particular computer or other apparatus. Various general-purpose systems may be used with programs and modules in accordance with the teachings herein, or it may prove convenient to construct a more specialized apparatus to perform desired method steps. In addition, the present invention is not described with reference to any particular programming language. It will be appreciated that a variety of programming languages may be used to implement the teachings of the invention as described herein. The instructions of the programming language(s) may be executed by one or more processing devices, e.g., central processing units (CPUs), processors, or controllers.

Exemplary embodiments of the invention, as will be described in greater detail below, provide apparatuses, methods and computer programs for management interface for multiple storage subsystems virtualization.

First Embodiment

In this embodiment, only one storage subsystem provides an interface to set/register a storage function. A server sends a storage function request with virtual volume ID to that storage subsystem. Upon receiving the request, the storage subsystem identifies a target physical storage subsystem and logical volume ID related to the virtual volume, changes the virtual volume ID to the logical volume ID on the request, and transfers the request to the target storage subsystem.

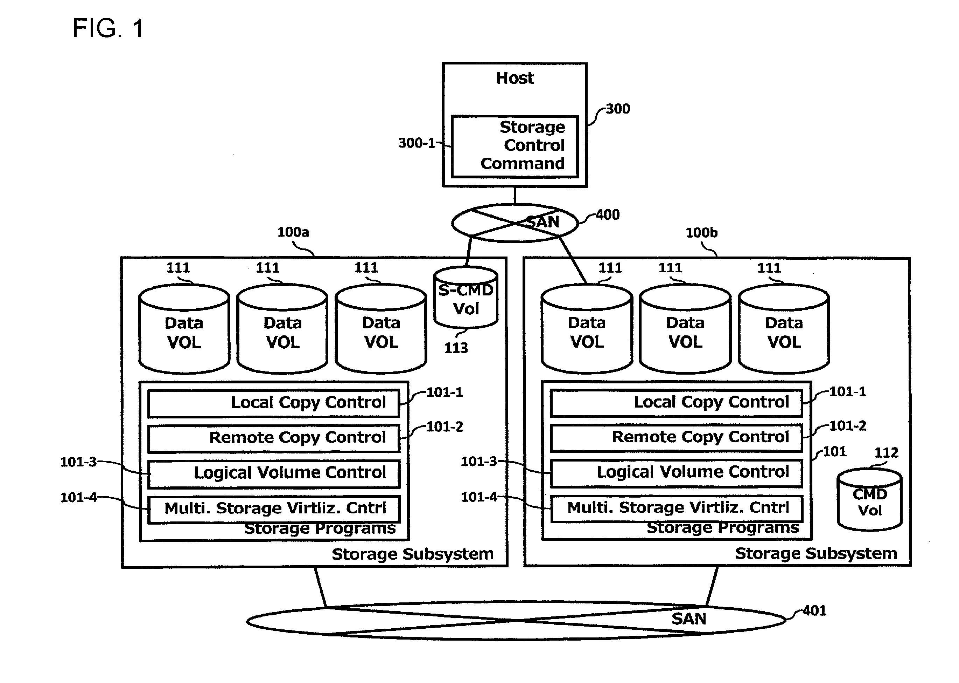

FIG. 1 illustrates an example of the physical and logical hardware configuration of a system in which the method and apparatus of the invention may be applied according to the first embodiment of the invention. Each Storage Subsystem 100a and 100b is a kind of computer system having processor(s), memory 101 and disks. The processor runs program stored on the memory 101. It provides Data Volume 111, Command Volume 112, and S-Command Volume 113. It stores data of the Data Volume 111 into the disks. The Data Volume 111 is a logical image for a host computer. The Command Volume 112 is an interface to receive a storage function setting command from a host computer or some other storage subsystem. This interface requires a logical volume ID to set a storage function to the logical volume. The S-Command Volume 113 is an interface to receive a storage function setting command from a host computer. This interface requires a virtual volume ID to set a storage function to its related logical volume. The memory 101 stores programs and tables including, for example, Local Copy Control 101-1, Remote Copy Control 101-2, Logical Volume Control 101-3, and Multiple Storages Virtualization Control 101-4. The Logical Volume Control 101-3 manages and controls a logical volume. The Multiple Storages Virtualization Control 101-4 manages a mapping between virtual volume and physical storage subsystem and logical volume. The Local Copy Control 101-1 and Remote Copy Control 101-2 provide different kinds of storage functions. The Host Computer 300 has processor(s) and a memory. The processor runs program stored on the memory. In the memory, Storage Control Command 300-1 is stored. The Host Computer 300 connects to the Storage Subsystems 100a and 100b via the Network 400. The Storage Control Command 300-1 sends a storage function request with virtual volume ID to an S-Command Volume 113. The Network 400 is a connection between the Host Computer 300 and Storage Subsystems 100a and 100b. The Network 401 is a connection between the Storage Subsystems 100a and 100b. The networks transfer data and requests. In this embodiment, only the Storage Subsystem provides an S-Command Volume 113 to a Host Computer 300. The Host Computer 300 mounts a Data Volume 111 of the Storage Subsystem 100b.

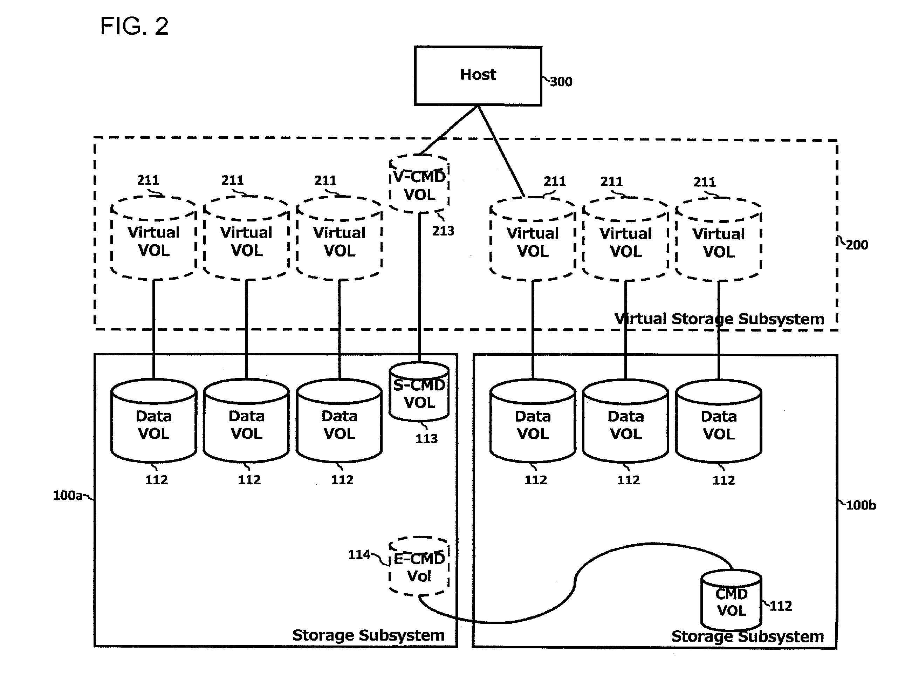

FIG. 2 illustrates an example of the virtual, physical logical hardware configuration of the system of FIG. 1. A Virtual Storage Subsystem 200 is not an actual device, but only a configuration for management. The Multiple Storages Virtualization Control 101-4 of each storage subsystem manages virtual volumes in the Virtual Storage Subsystem 200. It provides the virtual volumes with Virtual Data Volume 211 and Virtual Command Volume 213. The Virtual Data Volume 211 relates to Data Volume 111 and has an independent ID from the Data Volume 111. The Virtual Command Volume 213 relates to S-Command Volume 113 and has an independent ID from the S-Command Volume 113. The Storage Subsystem 100a mounts the Command Volume 112 of the Storage Subsystem 100b as an External Volume 114. This allows the Storage Subsystem 100a to transfer a request to the Storage Subsystem 100b via the Command Volume 112. A virtual volume is actually controlled and managed by a storage subsystem to which a related logical or command volume belongs.

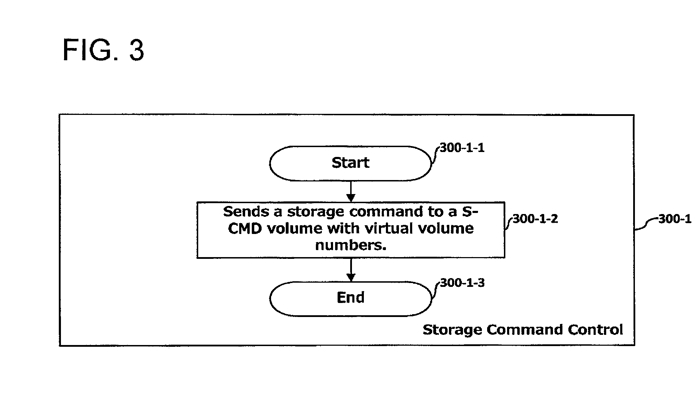

FIG. 3 illustrates an example of a process flow of the Storage Command Control 300-1 according to the first embodiment. This program runs when the user or user's script requests to use a storage function for a virtual data volume. The program starts at step 300-1-1. In step 300-1-2, the program sends a request to an S-Command Volume 113 with a virtual volume ID. In step 300-1-3, the program ends after the request in step 300-2 is completed.

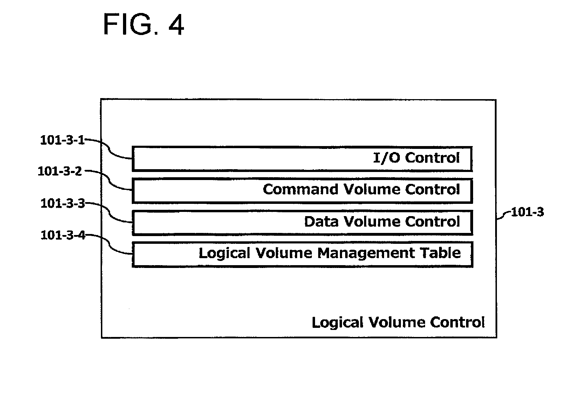

FIG. 4 illustrates the example of a configuration of the Logical Volume Control 101-3. It includes I/O Control 101-3-1, Command Volume Control 101-3-2, Data Volume Control 103-3, and Logical Volume Management Table 101-3-4. The I/O Control 101-3-1 controls I/O that occurs on the Data Volume 111, Command Volume 112, and/or S-Command Volume 113. This program runs when a storage subsystem receives an I/O command. The Command Volume Control 101-3-2 sets a storage function to the designated volume. This program is called by the I/O Control 101-3-1 when it runs on the Command Volume 112. The Data Volume Control 101-3-3 controls data transferring with a read/write I/O command between a host computer and a Data Volume 113. This program is called by the I/O Control 103-3-1 when it runs on the Data Volume 111. The Logical Volume Management Table 101-3-4 manages the type (data, command, or s-command volume) and configuration (internal/external and capacity) of a logical volume.

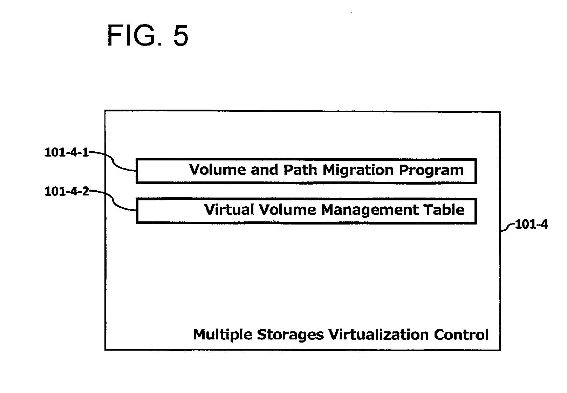

FIG. 5 illustrates an example of a configuration of the Multiple Storages Virtualization Control 101-4. It includes Volume And Path Migration Program 101-4-1 and Virtual Volume Management Table 101-4-2. The Volume And Path Migration Program 101-4-1 controls non-disruptive volume migration between storage subsystems. The Virtual Volume Management Table 101-4-2 manages mapping between a virtual volume and physical storage subsystem and a logical volume.

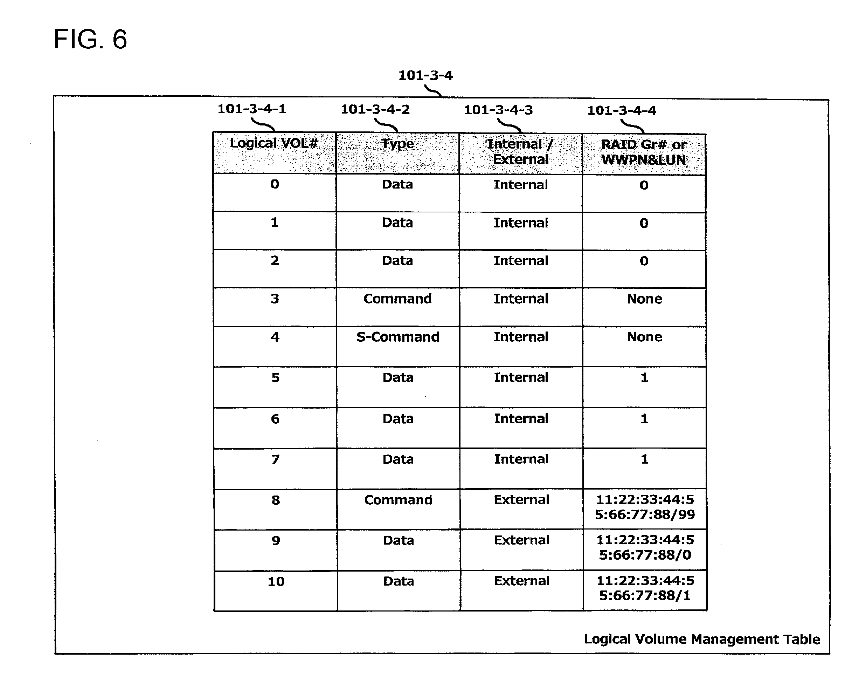

FIG. 6 illustrates an example of a configuration of the Logical Volume Management 101-3-4. The table manages data, command, and s-command volumes. It has columns of Logical Volume Number 101-3-4-1, Volume Type 101-3-4-2, Location Information 101-3-4-3, and Physical Information 101-3-4-4. The Logical Volume Number 101-3-4-1 stores an ID of a logical volume. The ID is unique in the storage subsystem. The Volume Type 101-3-4-2 stores a type of the volume. If the volume type is "data volume," it stores "Data." If the volume type is "command volume," it stores "Command." If the volume type is "s-command volume," it stores "S-Command." The Location Information 101-3-4-3 stores location information. If the volume is a data volume and the capacity area is allocated from internal disks, it stores "Internal." If the volume is a data volume and the capacity area is allocated from an external storage subsystem volume, it stores "External." If the volume is a command volume and it does not mount a command volume of another storage subsystem, it stores "Internal." If the volume is a command volume and it mounts a command volume of another storage subsystem, it stores "External." If the volume is an s-command, it stores "Internal." The Physical Information 101-3-4-4 stores physical information of the volume. If the Location Information 101-3-4-3 is "External," it stores the VVWPN and LUN of the mounted volume. If the Location Information 101-3-4-3 is "Internal" and the volume is data volume, it stores the ID of the RAID group which stores the volume data.

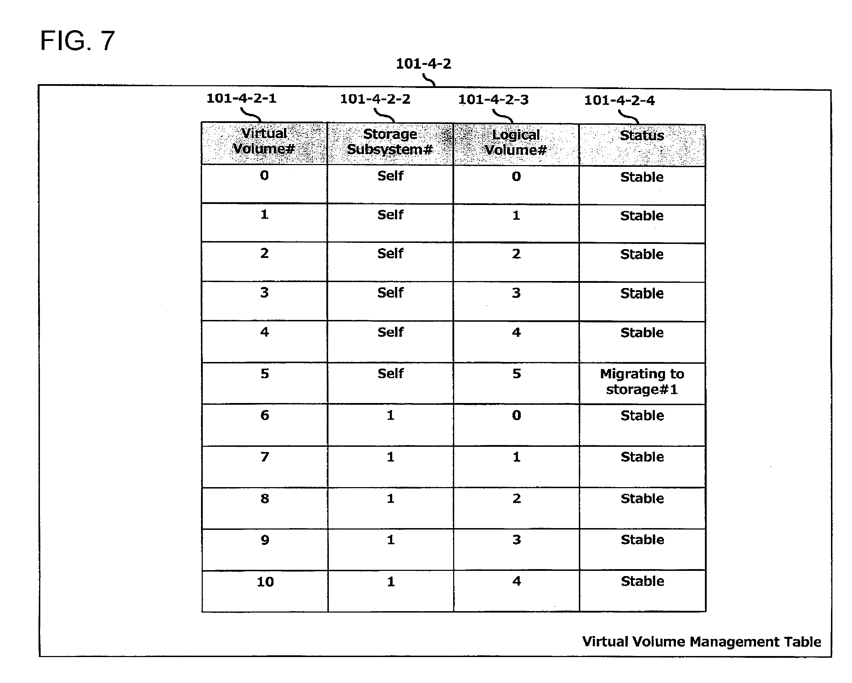

FIG. 7 illustrates an example of a configuration of the Virtual Volume Management Table 101-4-2. This table manages mapping between a virtual volume and physical storage subsystem and a logical volume. It has columns of Virtual Volume Number 101-4-2-1, Storage Subsystem Number 101-4-2-2, Logical Volume Number 101-4-2-3, and Migration Status 101-4-2-4. The Virtual Volume Number 101-4-2-1 stores an ID of a virtual volume. The ID is unique in the storage system. The Storage Subsystem Number 101-4-2-2 stores an ID of a storage subsystem to which the virtual volume belongs. If the storage subsystem to which the virtual volume belongs is the same as that to which this table is stored, it stores "Self." The Logical Volume Number 101-4-2-3 stores an ID of a logical volume to which the virtual volume is related. The Migration Status 101-4-2-4 stores a status of volume migration between storage subsystems.

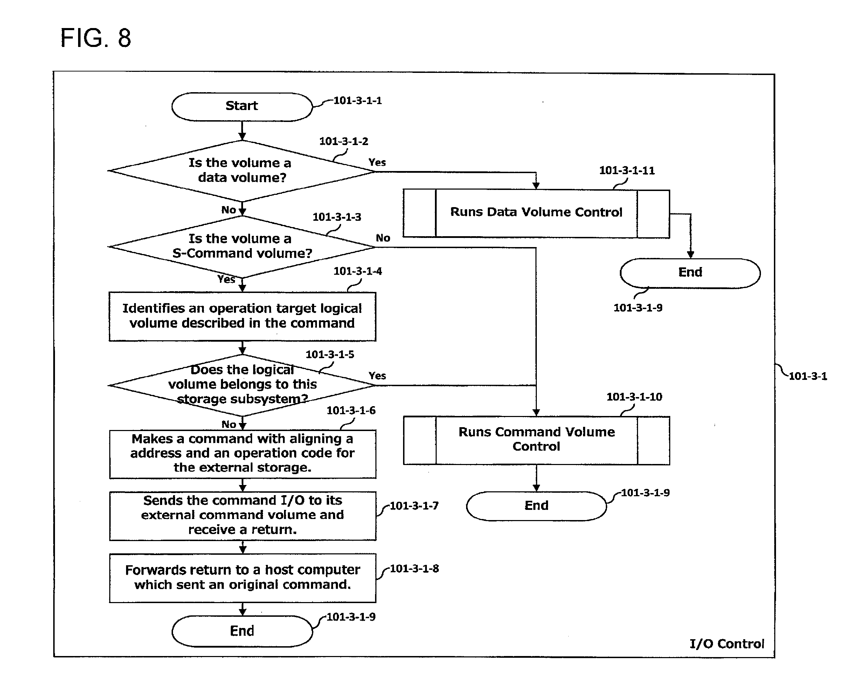

FIG. 8 illustrates an example of a process flow of the I/O Control 101-3-1. This program runs when a storage function request is received for a logical volume (data, command, or s-command volume). The program starts at step 101-3-1-1. In step 101-3-1-2, the program checks the volume type using the Volume Type 101-3-4-2. If the type is "Data," it proceeds to step 101-3-1-11; otherwise, it proceeds to step 101-3-1-3. In step 101-3-1-3, it checks the volume type using the Volume Type 101-3-4-2. If the type is not "S-Command," it proceeds to step 101-3-1-10; otherwise, it proceeds to step 101-3-1-4. In step 101-3-1-4, it finds a physical storage subsystem and a logical volume ID of the virtual volume from the Storage Subsystem Number 101-4-2-2 and Logical Volume Number 101-4-2-3. It identifies an operation target logical volume described in the storage function request. In step 101-3-1-5, it checks the transfer target storage subsystem and determines whether the logical volume belongs to the storage subsystem on which the program is run. If the Storage Subsystem Number 101-4-2-2 is "Self," it proceeds to Step 101-3-1-10 and changes the virtual volume ID to the logical volume ID of the storage function request; otherwise, it proceeds to step 101-3-1-6. In step 101-3-1-6, it identifies an external command volume to transfer the request and aligns an address and an operation code for the external storage. It changes the virtual volume ID to the logical volume ID of the storage function request. In step 101-3-1-7, it transfers the changed request to the storage subsystem to which the virtual volume belongs via a mounted command volume, and waits for a return of the request from the external command volume. In step 101-3-1-8, it forwards the return to the host computer which sent the original storage function request. The program ends at step 101-3-1-9. In step 101-3-1-10, the program calls the Data Volume Control 101-3-3 to do read/write I/O to a data volume. In step 101-3-1-11, the program calls the Command Volume Control 101-3-2 to set/register the storage function to the designated logical data volume.

Second Embodiment

In the second embodiment, each storage subsystem provides an interface to set a storage function. A server sends a request with logical volume ID to the storage subsystem to which a virtual volume belongs, after it translates the virtual volume ID to a physical storage subsystem and logical volume.

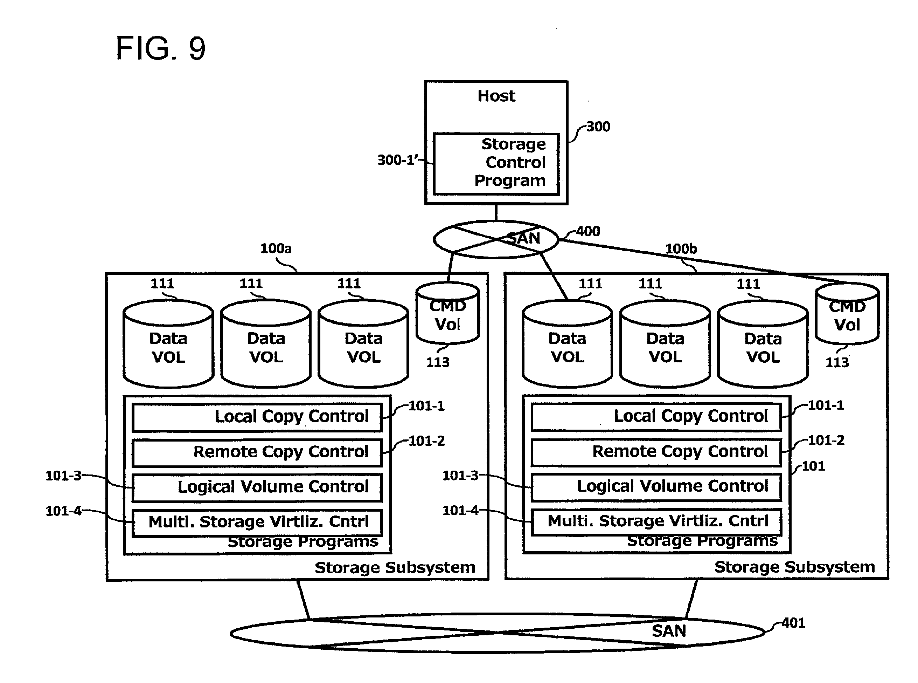

FIG. 9 illustrates the example of the physical and logical hardware configuration of a system according to the second embodiment. Only differences from FIG. 1 are described. The Storage Subsystem 100a does not provide an S-Command Volume 113, but provides a Command Volume 112 to the Host Computer 300. The Host Computer 300 stores Storage Control Command 300-1' instead of Storage Control Command 300-1.

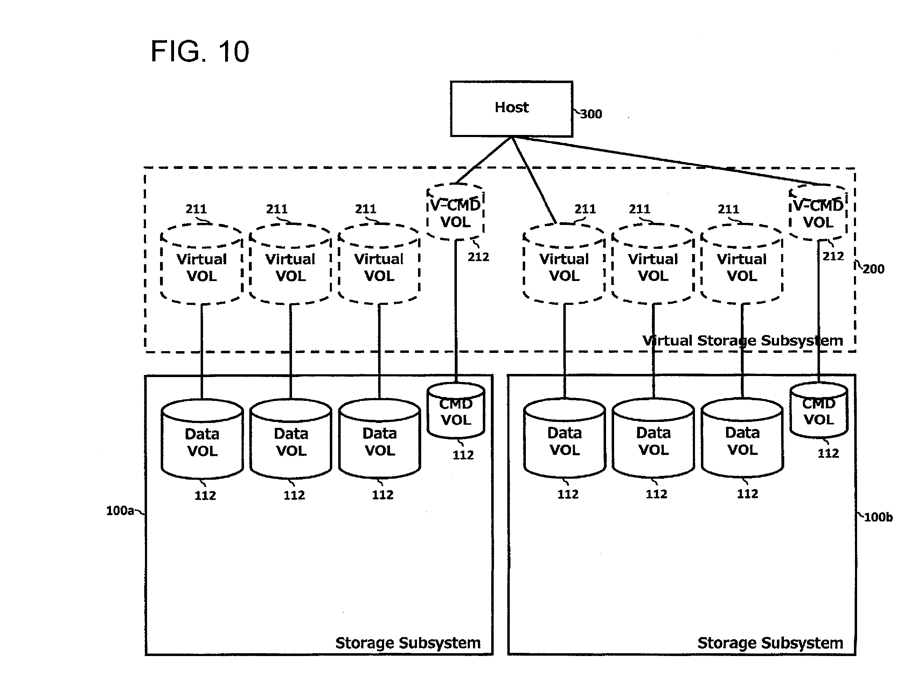

FIG. 10 illustrates an example of the virtual, physical logical hardware configuration of the system of FIG. 9. Only differences from FIG. 2 are described. The Virtual Storage Subsystem 200 provides a plurality of Virtual Command Volumes 212. The Virtual Storage Subsystem 200 does not provide a Virtual Command Volume 213. A Virtual Command Volume 212 is related to a Command Volume 112.

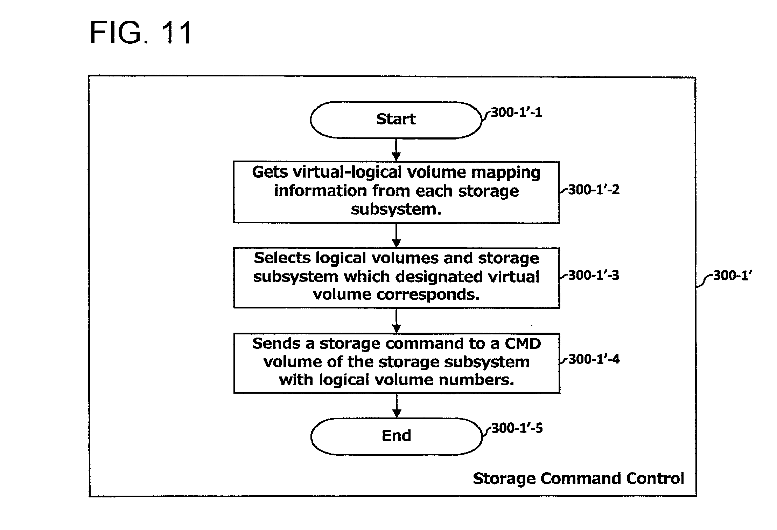

FIG. 11 illustrates an example of a process flow of the Storage Command Control 300-1' according to the second embodiment. This program runs when the user or user's script requests to use a storage function for a virtual data volume. The program starts at step 300-1'-1. In step 300-1'-2, it gets the Virtual Volume Management Table 101-4-2 of each storage subsystem. In step 300-1'-3, it identifies the physical storage subsystem and logical volume ID of the virtual volume. The owner storage subsystem of the virtual volume stores "Self" in the Storage Subsystem Number 101-4-2-2. In step 300-1'-4, it changes the virtual volume ID to the logical volume ID of the storage function request. It transfers the changed request to the command volume of a storage subsystem to which the virtual volume belongs. The program ends at step 300-1'-5 after the request in step 300-1'-4 is completed.

Third Embodiment

In the third embodiment, a storage management terminal provides an interface to set a storage function. The storage management terminal shows and manages virtual volumes. When a user inputs a request on the storage management terminal for a virtual volume, the terminal identifies the owner storage subsystem of the virtual volume and logical volume ID, and it send the request to the owner with the logical volume ID.

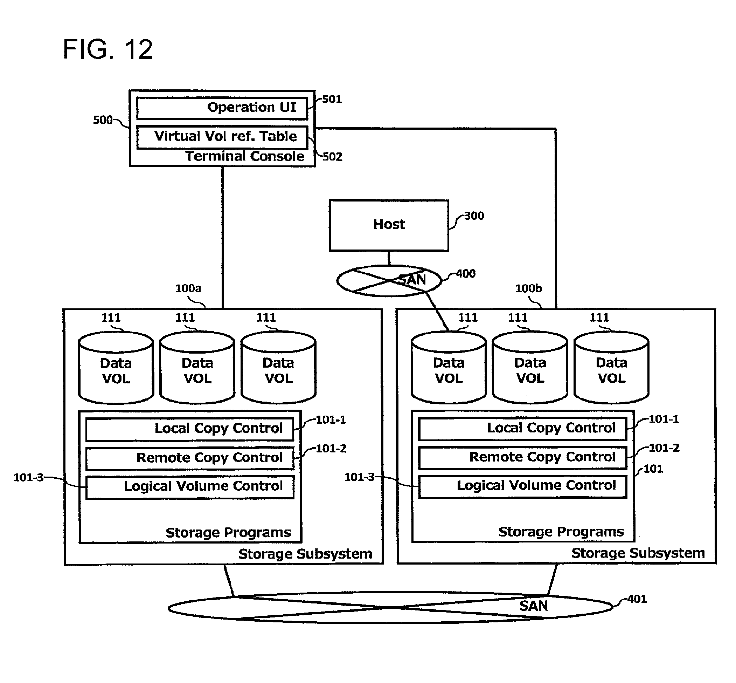

FIG. 12 illustrates an example of the physical and logical hardware configuration of a system according to the third embodiment. Only differences from FIG. 1 are described. The Storage Subsystem 100a does not provide an S-Command Volume 113 and the Storage Subsystem 100b does not provide a Command Volume 112. The Host Computer 300 does not have the Storage Control Command 300-1. A Storage Terminal Console 500 is connected to the Storage Subsystems 100a and 100b. The Storage Terminal Console 500 includes Operation User Interface (UI) 501 and Virtual Volume Reference Table 502. The Operation User Interface 501 is a program that runs when a user inputs a storage function setting. The input information includes a virtual volume ID. This program sends a request to a storage subsystem. The Virtual Volume Reference Table 502 manages a relation between a virtual volume and a physical storage subsystem and a logical volume.

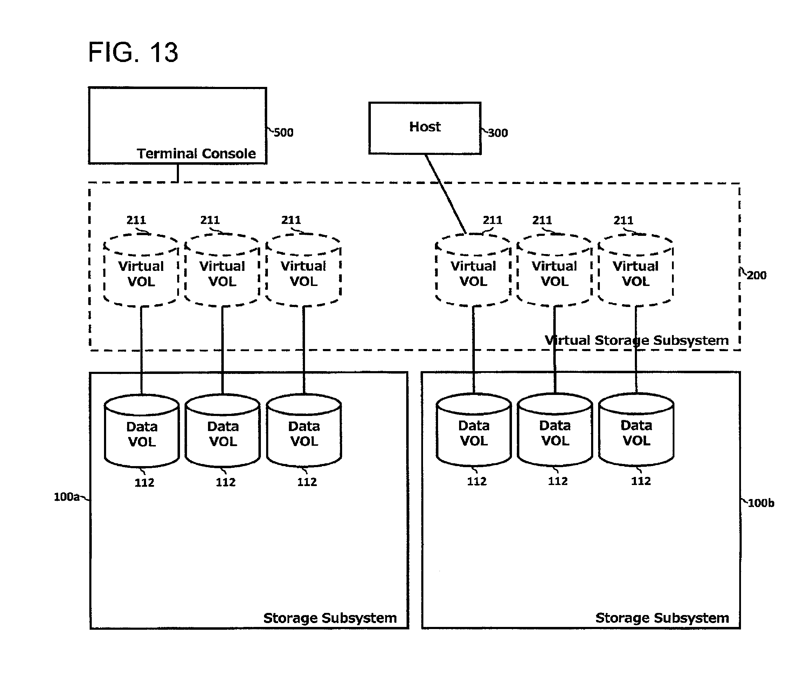

FIG. 13 illustrates an example of the virtual, physical logical hardware configuration of the system of FIG. 12. Only differences from FIG. 2 are described. The Virtual Storage Subsystem 200 does not provide a Virtual Command Volume 213.

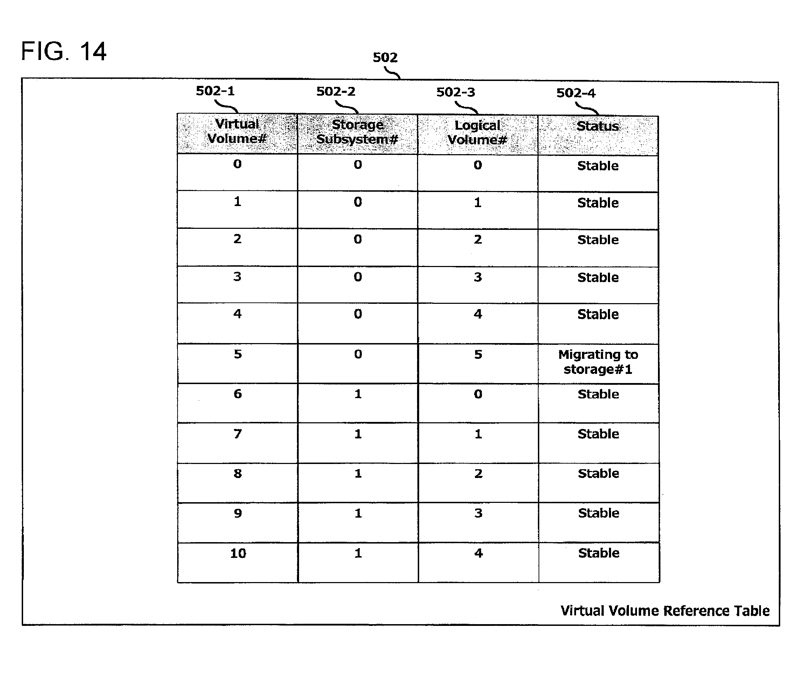

FIG. 14 illustrates an example of a configuration of the Virtual Volume Reference Table 502. This table manages mapping between a virtual volume and a physical storage subsystem and a logical volume. It includes columns of Virtual Volume Number 502-1, Storage Subsystem Number 502-2, Logical Volume Number 502-3, and Migration Status 502-4. The Virtual Volume Number 502-1 stores an ID of a virtual volume. The ID is unique in the storage system. The Storage Subsystem Number 502-2 stores an ID of a storage subsystem to which the virtual volumes belongs. The Logical Volume Number 502-3 stores an ID of a logical volume to which the virtual volumes is related. The Migration Status 502-4 stores a status of volume migration between storage subsystems.

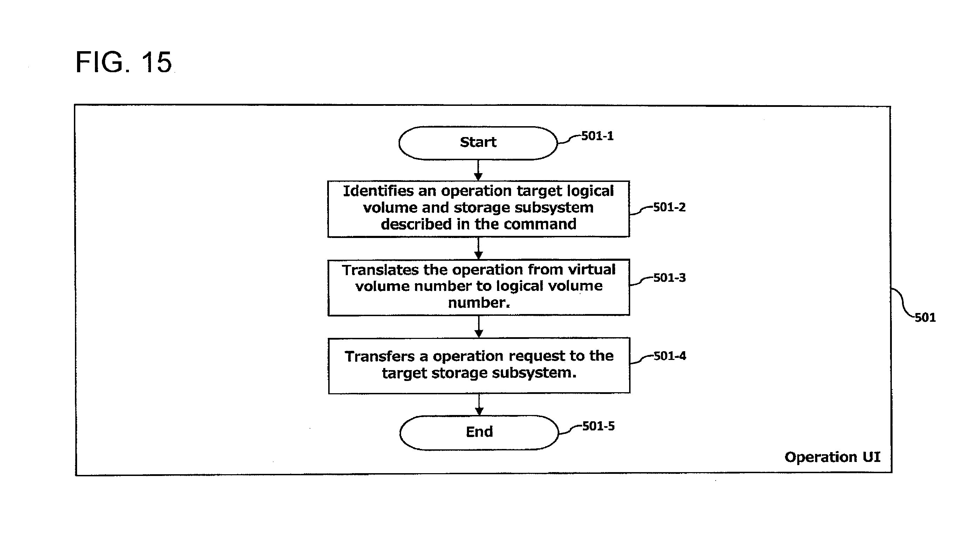

FIG. 15 illustrates an example of a process flow of the Operation User Interface 501. The program starts at step 501-1. In step 501-2, it gets the Virtual Volume Management Table 101-4-2 of each storage subsystem, and identifies the physical storage subsystem and logical volume ID of the virtual volume. The owner storage subsystem ID is stored in the Storage Subsystem Number 502-2. In step 501-3, it changes the virtual volume ID to logical volume ID of the storage function request. In step 501-4, it transfers the changed request to the command volume of a storage subsystem to which the virtual volume belongs. The program ends at step 501-5 after the request in step 501-4 is completed.

According to yet another embodiment, an administrator (e.g., via a management terminal) or a host computer broadcasts a storage function request with virtual volume ID to all the storage controllers each including the Multiple Storage Virtualization Management Table 101-4-2 as in the first embodiment. The storage controller which manages the target logical volume corresponding to the virtual volume ID responds and acts upon the storage function request by registering the storage function to be performed on the target logical volume.

Of course, the system configurations illustrated in FIGS. 1, 9, and 12 are purely exemplary of information systems in which the present invention may be implemented, and the invention is not limited to a particular hardware configuration. The computers and storage systems implementing the invention can also have known I/O devices (e.g., CD and DVD drives, floppy disk drives, hard drives, etc.) which can store and read the modules, programs and data structures used to implement the above-described invention. These modules, programs and data structures can be encoded on such computer-readable media. For example, the data structures of the invention can be stored on computer-readable media independently of one or more computer-readable media on which reside the programs used in the invention. The components of the system can be interconnected by any form or medium of digital data communication, e.g., a communication network. Examples of communication networks include local area networks, wide area networks, e.g., the Internet, wireless networks, storage area networks, and the like.

In the description, numerous details are set forth for purposes of explanation in order to provide a thorough understanding of the present invention. However, it will be apparent to one skilled in the art that not all of these specific details are required in order to practice the present invention. It is also noted that the invention may be described as a process, which is usually depicted as a flowchart, a flow diagram, a structure diagram, or a block diagram. Although a flowchart may describe the operations as a sequential process, many of the operations can be performed in parallel or concurrently. In addition, the order of the operations may be re-arranged.

As is known in the art, the operations described above can be performed by hardware, software, or some combination of software and hardware. Various aspects of embodiments of the invention may be implemented using circuits and logic devices (hardware), while other aspects may be implemented using instructions stored on a machine-readable medium (software), which if executed by a processor, would cause the processor to perform a method to carry out embodiments of the invention. Furthermore, some embodiments of the invention may be performed solely in hardware, whereas other embodiments may be performed solely in software. Moreover, the various functions described can be performed in a single unit, or can be spread across a number of components in any number of ways. When performed by software, the methods may be executed by a processor, such as a general purpose computer, based on instructions stored on a computer-readable medium. If desired, the instructions can be stored on the medium in a compressed and/or encrypted format.

From the foregoing, it will be apparent that the invention provides methods, apparatuses and programs stored on computer readable media for management interface for multiple storage subsystems virtualization. Additionally, while specific embodiments have been illustrated and described in this specification, those of ordinary skill in the art appreciate that any arrangement that is calculated to achieve the same purpose may be substituted for the specific embodiments disclosed. This disclosure is intended to cover any and all adaptations or variations of the present invention, and it is to be understood that the terms used in the following claims should not be construed to limit the invention to the specific embodiments disclosed in the specification. Rather, the scope of the invention is to be determined entirely by the following claims, which are to be construed in accordance with the established doctrines of claim interpretation, along with the full range of equivalents to which such claims are entitled.

## Claims

1. A storage system comprising:
a plurality of storage subsystems (100a; 100b) having a plurality of storage controllers managing a plurality of virtual volumes (211), each of the plurality of storage controllers managing a plurality of logical volumes and controlling to store data for a virtual volume (211) of the plurality of virtual volumes (211) to a logical volume of the plurality of logical volumes; and
a control module operable, in response to receiving a command commanding a registration of a storage function for a virtual volume (211) of the plurality of virtual volumes (211), to translate the received command into a translated command commanding a registration of the storage function for a target logical volume of the plurality of logical volumes, based on a mapping between the plurality of virtual volumes (211), the plurality of logical volumes, and the plurality of storage controllers;
wherein the storage controller which manages the target logical volume processes the translated command commanding the registration of the storage function for the target logical volume; and
wherein the control module is provided in at least one of the storage controllers or another computer in the storage system.

2. The storage system according to claim 1,
wherein the control module is configured to transfer the translated command to the storage controller which manages the target logical volume.

3. The storage system according to claim 1 or 2,
wherein the control module is provided in a storage controller in each of the storage subsystems (100a; 100b).

4. The storage system according to at least one of claims 1 to 3,
wherein each of the storage subsystems (100a; 100b) stores the mapping between the plurality of virtual volumes (211), the plurality of logical volumes, and the plurality of storage controllers.

5. The storage system according to claim 1,
wherein the control module is configured to update a status of the target logical volume on which to perform the storage function.

6. The storage system according to at least one of claims 1 to 5, further comprising:
a host computer (300) which includes the control module (300-1);
wherein the host computer (300) updates the mapping between the plurality of virtual volumes (211), the plurality of logical volumes, and the plurality of storage controllers, by collecting information from the plurality of storage subsystems (100a; 100b), in response to the received command.

7. The storage system according to at least one of claims 1 to 3, further comprising:
a management terminal which includes the control module, the management terminal storing the mapping between the plurality of virtual volumes (211), the plurality of logical volumes, and the plurality of storage controllers.

8. The storage system according to claim 1 or 2,
wherein the control module is provided in each of the storage subsystems (100a; 100b);
wherein the command is broadcast to each of the storage controllers;
wherein each of the storage subsystems (100a; 100b) stores the mapping between the plurality of virtual volumes (211), the plurality of logical volumes, and the plurality of storage controllers; and
wherein the storage controller which manages the target logical volume registers the storage function to be performed on the target logical volume, based on the translated command.

9. A method managing storage functions in a storage system which includes a plurality of storage subsystems (100a; 100b) having a plurality of storage controllers managing a plurality of virtual volumes (211), each of the plurality of storage controllers managing a plurality of logical volumes and controlling to store data for a virtual volume (211) of the plurality of virtual volumes (211) to a logical volume of the plurality of logical volumes, the method comprising:
in response to receiving, by a control module in the storage system, a command commanding a registration of a storage function for a virtual volume (211) of the plurality of virtual volumes (211), translating the received command into a translated command commanding a registration of the storage function for a target logical volume of the plurality of logical volumes, based on a mapping between the plurality of virtual volumes (211), the plurality of logical volumes, and the plurality of storage controllers, the translated command commanding the registration of the storage function for the target logical volume to be processed by the storage controller which manages the target logical volume;
wherein the control module is provided in at least one of the storage controllers or another computer in the storage system.

10. The method according to claim 9, further comprising:
transferring the translated command to the storage controller which manages the target logical volume.

11. The method according to claim 9 or 10, further comprising:
storing, in each of the storage subsystems (100a; 100b), the mapping between the plurality of virtual volumes (211), the plurality of logical volumes, and the plurality of storage controllers.

12. The method according to at least one of claims 9 to 11, further comprising:
updating a status of the target logical volume on which to perform the storage function.

13. The method according to at least one of claims 9 to 12, further comprising:
updating the mapping between the plurality of virtual volumes (211), the plurality of logical volumes, and the plurality of storage controllers, by collecting information from the plurality of storage subsystems (100a; 100b), in response to the received command.

14. The method according to claims 9 or 10, further comprising:
storing the mapping between the plurality of virtual volumes (211), the plurality of logical volumes, and the plurality of storage controllers in a management terminal which includes the control module.

15. The method according to at least one of claims 9 to 14, further comprising:
providing the control module in each of the storage controllers to receive the command and translate the received command;
storing, in each of the storage subsystems (100a; 100b), the mapping between the plurality of virtual volumes (211), the plurality of logical volumes, and the plurality of storage controllers; and
registering, by the storage controller which manages the target logical volume, the storage function to be performed on the target logical volume, based on the translated command.
